**Europäisches Patentamt**

**European Patent Office**

**Office européen des brevets**

(19)

(11) Veröffentlichungsnummer: **0 123 804**
**B1**

(12) # EUROPÄISCHE PATENTSCHRIFT

(45) Veröffentlichungstag der Patentschrift:
**28.01.87**

(51) Int. Cl.⁴: **H 04 B 3/28**

(21) Anmeldenummer: **84101653.8**

(22) Anmeldetag: **17.02.84**

(54) **Schaltung für Leistungsverstärker.**

(30) Priorität: **28.04.83 DE 3315384**

(43) Veröffentlichungstag der Anmeldung:
**07.11.84 Patentblatt 84/45**

(45) Bekanntmachung des Hinweises auf die Patenterteilung:
**28.01.87 Patentblatt 87/5**

(84) Benannte Vertragsstaaten:
**DE FR NL**

(56) Entgegenhaltungen:
**FR - A - 2 007 539**
**GB - A - 2 053 626**

(73) Patentinhaber: **Schaltbau Gesellschaft mbH,
Klausenburger Strasse 6, D-8000 München 80 (DE)**

(72) Erfinder: **Junck, Rainer, Dipl.-Ing., Am Lilienberg 4,
D-8000 München 80 (DE)**

(74) Vertreter: **Jakob, Peter H. et al, Patentanwälte
A.Grünecker, H. Kinkeldey W. Stockmair, K. Schumann
P.H. Jakob, G.Bezold Maximilianstrasse 58,
D-8000 München 22 (DE)**

## Beschreibung

Gegenstand der Erfindung ist eine Schaltung für einen Leistungsverstärker zur Speisung eines Koppeltransformators für den aktiven Reduktionsschutz von Fernmeldeleitungen, wobei die Schaltung für einen vorgegebenen Bereich von störenden Frequenzen ausgelegt ist, Mittel zur Kompensation sehr tiefer, ausserhalb des vorgegebenen Bereichs liegender Frequenzen aufweist, die verstärkt und auf den Koppeltransformator gegeben, diesen der Sättigung nahe bringen können und bei der das um diese Frequenzen bereinigte Störsignal dem Leistungsverstärker zugeführt wird.

Die DE-OS 2926092 hat eine Verstärkerschaltung für den aktiven Reduktionsschutz von Fernmeldeleitungen zum Gegenstand, bei der die Pilotader über eine Hilfswicklung des Koppeltransformators geführt wird. Zur Erfassung der in den Leistungswiderständen und dem Koppeltransformator auftretenden Phasenverschiebungen wird nach dieser Offenlegungsschrift das hinter dem Koppeltransformator an der Hilfswicklung anstehende Störsignal über einen Hilfsverstärker dem zweiten Eingang des Leistungsverstärkers zugeführt, der seinerseits die Primärwicklung des Koppeltransformators speist. Dadurch wird eine erhebliche Steigerung des Reduktionsfaktors erreicht. Treten nun Störsignale von nur wenigen Hz auf und gelangen diese in den Verstärker, so kann der Koppeltransformator in die Sättigung gelangen und als Kurzschluss wirken. Dann spricht im Leistungsverstärker die Überstrombegrenzung an. Dadurch treten auf den zu schützenden Leitungen Störspitzen auf, deren Amplitude unter Umständen grösser sein kann als die der eigentlichen Störung. Ausserdem wird die Endstufe des Verstärkers unzulässig überlastet. Es ist bekannt, die an der Pilotader anstehenden Störsignale, die eine Sättigung des Koppeltransformators herbeiführen könnten, einem invertierenden Tiefpass zuzuleiten und dessen Ausgang zusammen mit der Pilotader auf den Eingang eines Summierverstärkers zu legen und dessen Ausgang dem Leistungsverstärker zuzuführen. In dem Summierverstärker werden so die Störsignale von nur wenigen Hz herauskompensiert und gelangen nicht in den Leistungsverstärker. Da sie aber auch hinter dem Koppeltransformator an der Pilotader anstehen, können sie bei Schaltungen nach der DE-OS 2926092 noch über den Hilfsverstärker in den zweiten Eingang des Leistungsverstärkers gelangen. Für solche Schaltungen ist ein Analogschalter vorgesehen, der beim Ansprechen des Tiefpasses den Hilfsverstärker vom Leistungsverstärker trennt. Dies hat den Nachteil, dass für die Zeit des Auftretens der Störsignale von nur wenigen Hz die verbesserte Reduktion nach der DE-OS 2926092 aufgehoben ist.

Der Erfindung liegt die Aufgabe zugrunde, eine Schaltung anzugeben, die es erlaubt, die Störsignale mit nur wenigen Hz von dem Leistungsverstärker fernzuhalten und dennoch den günstigeren Reduktionsfaktor wenigstens annähernd beizubehalten.

Gemäss der Erfindung geschieht dies dadurch, dass das um die sehr tiefen Frequenzen bereinigte Störsignal zusätzlich einen Hilfsverstärker zugeführt wird, dessen Ausgang ebenfalls auf den Eingang des Leistungsverstärkers gelegt ist und diesem das Störsignal in einer verminderten, dem in der Schaltung erzielten Reduktionsgrad entsprechenden Höhe zuführt.

Die erfindungsgemässe Schaltung hat den wesentlichen Vorteil, dass der Reduktionsfaktor von dem Auftreten von Störsignalen mit nur wenigen Hz unberührt bleibt.

Die Fig. zeigt in zum Teil schematischer Darstellung ein Ausführungsbeispiel einer Schaltung nach der Lehre der Erfindung.

Mit 1 ist der Eingang der Pilotader in die Schaltung bezeichnet. Sie führt dem Vorverstärker 2 alle Störsignale zu, darunter auch die von nur wenigen Hz. Diese letzteren werden aber einmal direkt und zum anderen über den invertierenden Tiefpass 3 dem Eingang des Sumierverstärkers 4 zugeführt, so dass an dessen Ausgang die Signale mit nur wenigen Hz nicht mehr auftreten, sondern nur noch die sonstigen Störsignale, die an den Eingang des Leistungsverstärkers 5 gelangen. Um nun zu bewirken, dass auch bei Auftreten von Störsignalen mit nur wenigen Hz die günstigen Reduktionsverhältnisse erhalten bleiben, die bei der Schaltung nach der DE-OS 2926092 erzielt werden und die Störsignale von nur wenigen Hz nicht durch eine Rückkopplung in die Schaltung wieder eingeschleppt werden, wird erfindungsgemäss das hinter dem Summierverstärker anstehende und um die sehr tiefen Frequenzen bereinigte Störsignal zusätzlich einem Hilfsverstärker 6 zugeführt. Der Hilfsverstärker 6 wird nun erfindungsgemäss so betrieben, dass an seinem Ausgang ein vermindertes Störsignal auftritt, das in seiner Höhe dem in der Schaltung erzielten Reduktionsgrad entspricht und das neben dem unverminderten, hinter dem Sumierverstärker 4 anstehenden Störsignal als zweites Eingangssignal dem Leistungsverstärker 5 zugeführt wird.

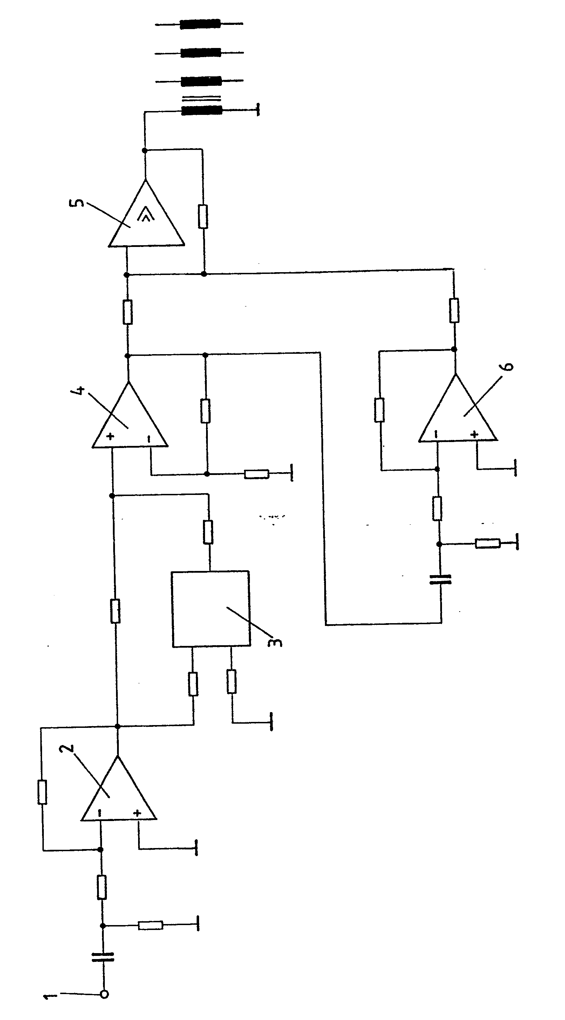

## Patentanspruch

Schaltung für einen Leistungsverstärker (5) zur Speisung eines Koppeltransformators für den aktiven Reduktionsschutz von Fernmeldeleitungen, wobei die Schaltung für einen vorgegebenen Bereich von störenden Frequenzen ausgelegt ist, Mittel (3, 4) zur Kompensation sehr tiefer, ausserhalb des vorgegebenen Bereichs liegender Frequenzen aufweist, die verstärkt und auf den Koppeltransformator gegeben, diesen der Sättigung nahe bringen können und bei der das um diese Frequenzen bereinigte Störsignal dem Leistungsverstärker (5) zugeführt wird, dadurch gekennzeichnet, dass das um die sehr tiefen Frequenzen bereinigte Störsignal zusätzlich einem Hilfsverstärker (6) zugeführt wird, dessen Ausgang ebenfalls auf den Eingang des Leistungsverstärkers (5) gelegt ist und diesem das Störsignal in einer verminderten, dem in der Schaltung erzielten Reduktionsgrad entsprechenden Höhe zuführt.

**0123804**

**Claim**

Circuit for a power amplifier (5) for feeding a coupling transformer for the active protection of the screening factor of telecommunication lines, the circuit being designed for a predetermined range of interfering frequencies, means (3, 4) for compensating very low frequencies lying outside the predetermined range which, amplified and applied to the coupling transformer, can bring the latter close to saturation, and in which the interference signal , from which these frequencies have been removed, is supplied to the power amplifier (5), characterized in that the interference signal, from which the very low frequencies have been removed, is additionally supplied to an auxiliary amplifier (6) the output of which is also applied to the input of the power amplifier (5) and which supplies the latter with the interference signal at a reduced amplitude corresponding to the degree of screening achieved in the circuit.

**Revendication**

Montage de circuit pour un amplificateur de puissance (5) servant à alimenter un transformateur de liaison pour la protection de réduction active de câbles de télécommunication, le montage étant étudié pour une zone prédéterminée de fréquences perturbatrices, comportant des moyens (3, 4) pour compenser des fréquences très basses, se situant en dehors de la zone prédéterminée, qui, amplifiées et arrivant au transformateur de liaison peuvent amener celui-ci au voisinage de la saturation, montage selon lequel le signal perturbateur corrigé de ces fréquences est amené au transformateur de puissance (5), caractérisé en ce que le signal perturbateur corrigé des très basses fréquences est amené en plus à un amplificateur auxiliaire (6), dont la sortie est placée également sur l'entrée de l'amplificateur de puissance (5) et fournit à celui-ci le signal perturbateur à un niveau amoindri correspondant au taux de réduction obtenu dans le montage.